# EUROPEAN PATENT APPLICATION

(11) **EP 2 120 239 A1**
(43) Date of publication of application: **18.11.2009**
(21) Application number: 08381017.6
(22) Date of filing: 22.05.2008
(51) Int. Cl.: G11B 33/04

(54) **Carrying case for optical digital supports**

(30) Priority: 14.05.2008 ES 200801403
(71) Applicant: Devesa Company, Joaquin, 03814 Benasau (ES)
(72) Inventor: Devesa Company, Joaquin, 03814 Benasau (ES)
(74) Representative: Esteban Perez-Serrano, Maria Isabel

(57) **Abstract**

The present invention refers to a case (1,2) for carrying optical digital supports. The digital optical supports may be for example, CDs or DVDs. The carrying case which is the object of the invention is of the type which comprises two external bodies (1.1,2.1) provided with a base and lateral walls (1.2,2.2) and which are situated in position facing each other joined by hinged means (4). It also consists of an intermediate body (3) situated between both external bodies and designed to house at least one optical digital support. The carrying case which is the object of the invention is characterised in that both the external (1.1,2.1) and intermediate bodies (3) include means (1.2.2,2.2.2,3.1.1) which permit closure of the case through clipping.

## Description

### OBJECT OF THE INVENTION

The present invention refers to a carrying case for holding optical digital supports. The digital optical supports may be for example, CD or DVD,

The carrying case which is the object of the invention is the type consisting of a casing formed by two articulated external bodies which are provided with a base and lateral walls. The case also consists of an intermediate body situated between both external bodies and designed to house at least one optical digital support.

The portable case is **characterised in that** the closure is produced by a combination of adequate clipping means in both the external and intermediate bodies.

### BACKGROUND TO THE INVENTION

Cases are known which house optical devices of the CD or DVD kind. These cases normally consist of an external casing, which may be metal or plastic, which serves both as protection for the optical device and as a means for communicating the content thereof, or as a means of advertising.

In some of these cases, the external casing itself is provided with means generally of retention or clipping which enable one or more optical devices or even a libretto which accompanies it It is also possible that in addition to the casing, the case comprises an additional element situated in the interior of the casing and which is also provided with means for housing one or more optical devices or librettos.

This invention discloses a case which is provided with closure means which involve both the external casing and the additional intermediate element, achieving a reliable closure and a simple execution.

### DESCRIPTION OF THE INVENTION

The invention refers to a case for carrying optical digital supports of the CD DVD type or similar.

The carrying case is of the type which comprises a casing which is provided with at least two external articulated bodies, so that in a closed position of the case they are situated one on top of the other, accessing the content of the case by separating both bodies which will remain joined on one of its faces where these are articulated.

The bodies are provided with a base and lateral walls which are normally perpendicular to the base and which in the position of closure may be situated facing in such a way that the content of the case remains perfectly protected from the outside.

The case also comprises an intermediate body situated between both external bodies and designed to house at least one optical digital support as it is provided with means, for example a clip or grasp, which are able to retain at least one digital support of the type described previously.

The carrying case which is the object of the invention is **characterised in that** the intermediate body is provided in its perimeter zone with at least one groove which is designed to contain when the case is in closed position, the perimeter ends of the lateral walls of the external bodies. closure is achieved by means of clipping between the external bodies and the intermediate body.

### DESCRIPTION OF THE DRAWINGS

The present descriptive report is complemented by a set of plans illustrating a preferred embodiment of the invention, but which is in no way restrictive.

Figure 1 shows a perspective view of an example of an embodiment of the external bodies of the carrying case situated in open position.

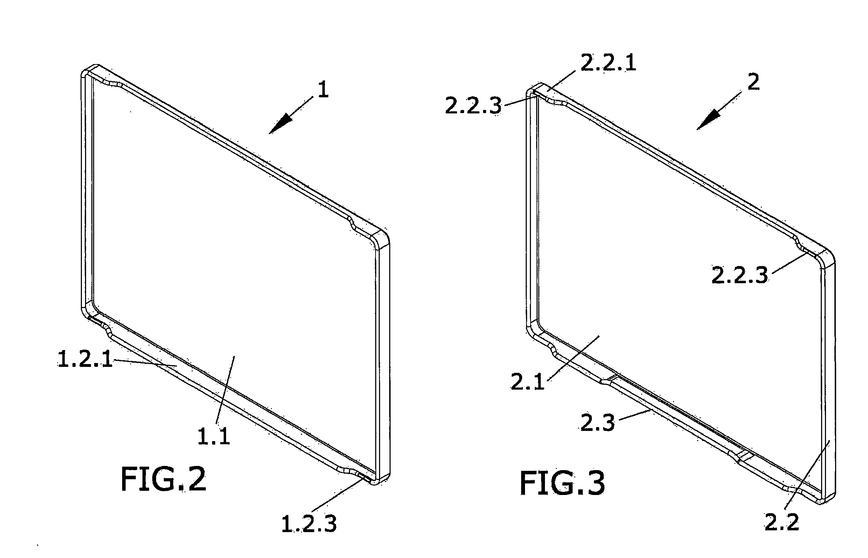

Figure 2 is a perspective view of one of the external bodies corresponding to the example of an embodiment in figure 1.

Figure 3 is a perspective view of the opposite external body of figure 2 corresponding to the example of an embodiment in figure 1.

Figure 4 shows a perspective view of an example of an embodiment of the closure means.

Figure 5 shows a perspective view of an example of an embodiment of an intermediate body.

Figure 6 is a perspective view of an example of an embodiment of the means for articulating the external bodies corresponding to figure 1.

Figure 7 is a perspective view of an example of an embodiment of the hinge corresponding to the means of articulation corresponding to figure 6.

Figure 8 is a perspective view of an example of an embodiment of a hinge differing from that corresponding to figure 7.

Figure 9 shows a perspective view of another example of an embodiment of articulation means of the external bodies which are arranged integrally in the intermediate body itself.

Figure 10 is a section of the means of articulation corresponding to the example of an embodiment in figure 9.

Figure 11 is a perspective view of another example of an embodiment of an intermediate body which comprises means of articulation corresponding to figures 9 and 10.

Figure 12 is a perspective view of an additional intermediate body which may carry a magnetic device and a libretto.

Figure 13 shows a perspective view of an embodiment of the clipping means of the optical digital support element.

### PREFERRED EMBODIMENT OF THE INVENTION

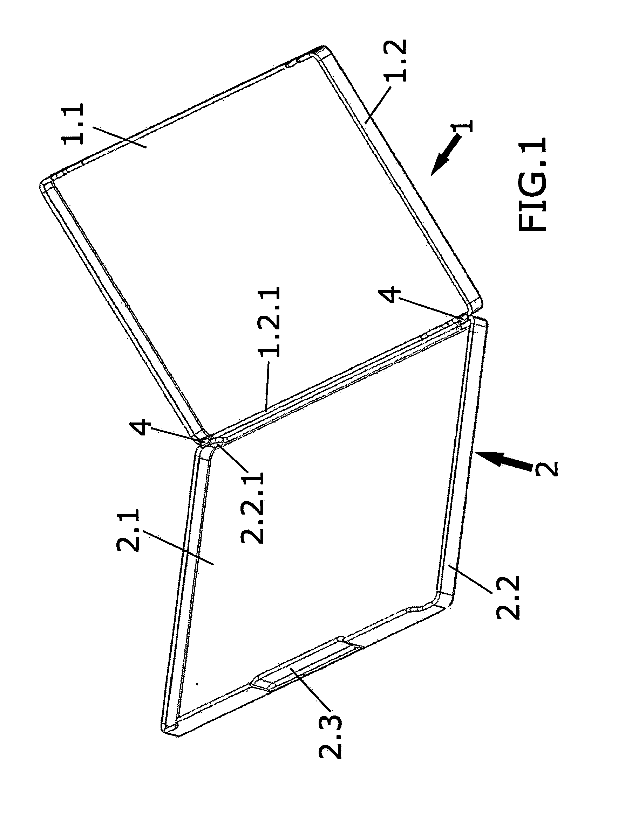

Figure 1 shows an example of an embodiment in which the external bodies (1,2)are independent and are provided with a base (1.1, 2.1) and lateral walls (1.2, 2.2) which are situated facing in closed position of the case. The external bodies (1,2) shall comprise the visible part of the case.

Two of its lateral walls (1.2.1, 2.2.1) are arranged joined through articulation means in this case hinged.

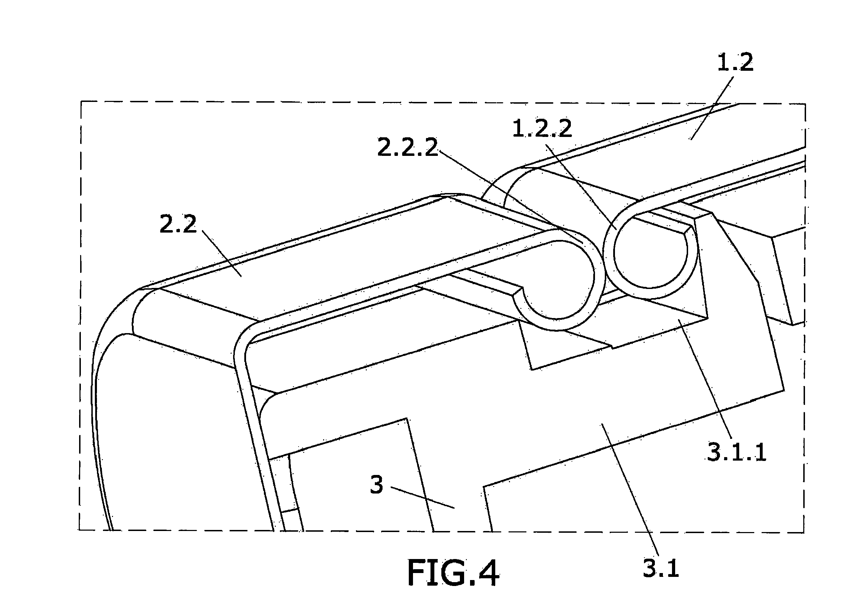

Figure 4 shows an example of an embodiment of the means of closure which involve the intermediate body (3) designed to be situated between both external bodies (1,2) and designed to house at least one optical digital support. The intermediate body (3) comprises at least one groove (3.1.3) which is situated on a projection (3.1) designed to contain, in closed position of the case, some perimeter ends (1.2.2, 2.2.2) of the external bodies (1,2) by means of clipping, in this way producing closure of the case.

In the embodiment shown in the figures, and for the purpose of facilitating manufacture of the case which is the object of the invention, both external bodies (1,2) facing each other are essentially symmetrical so that they may be manufactured by means of a die or mould for example.

In addition, in order to assist the user in opening the case, at least one of the lateral walls of one of the external bodies, in the embodiment shown, the wall opposite that which is provided with articulated means, comprises a hollow (2.3) into which the user's fingertips are placed, for exerting the requisite force required to separate both bodies (1.2), thus opening the case.

In the preferred embodiment, the external bodies (1,2) are made from metal materials with the intermediate body (3) made from plastic material. The perimeter end (1.2.2, 2.2.2) of the lateral walls (1.2, 2.2) of the external ends (1,2) is rounded.

The intermediate body (3) is arranged joined to one of the external bodies (2) by means of perimeter projections (3.2) designed to remain housed under the perimeter edge (2.2.2) of the aforementioned external body (2). These perimeter projections (3.2) are provided with a profile, for example growing upwards which permit an easy introduction and subsequently prevent the intermediate body (3) from disconnecting from the external body (2).

In the preferred embodiment shown in figures 1,6,7 and 8 the means of articulation comprising independent elements which consist of at least one hinge (4) which comprises rotation points in its connection with each of the external bodies (1,2).

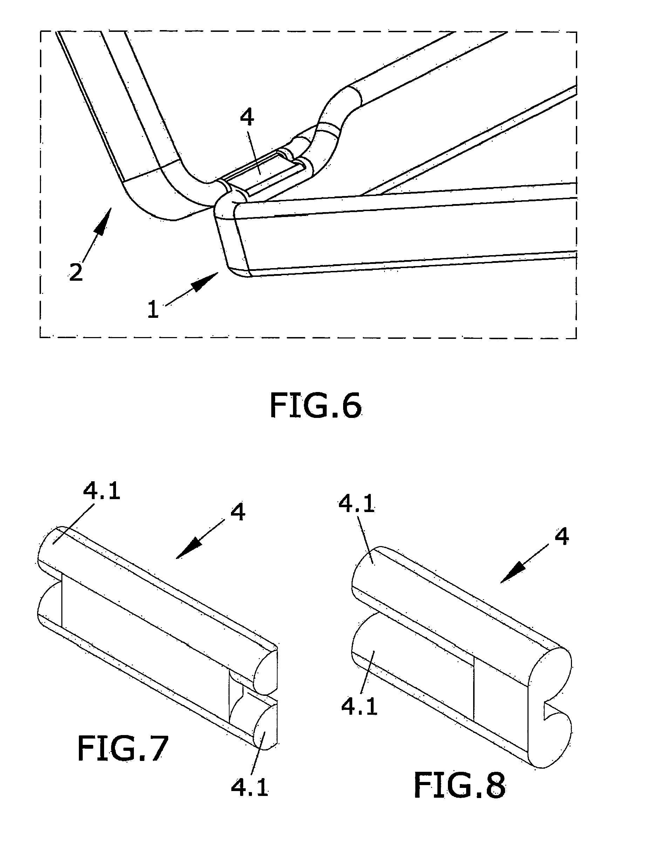

In order to do so, the embodiment shown in figures 7 and 8, the hinge (4) comprises respective profile wings (4,1) a section of circumference which are arranged in a joined position and which are introduced in grooves (1.2.3, 2.2.3) which are made in teh perimeter ends (1.2.2, 2.2.2) fo the lateral walls (1.2.1, 2.2.1) which are also provided with a circumferential profile in such a way that the hinges (4) may rotate within the same (1.2.3, 2.2.3) In the embodiment shown in figure 7 the wings (4.1) extend on both side of the central part of the connection defining four points of connection whereas the embodiment shown in figure 8 only prolongs the wings (4.1) on one side, with these (4.1) being longer that the former and therefore it is provided with two points of connection.

In this way once the case has been opened, both external bodies (1,2) remain at the same height and not with one situated above the other. the hinges (4) could be made from either plastic or metal material.

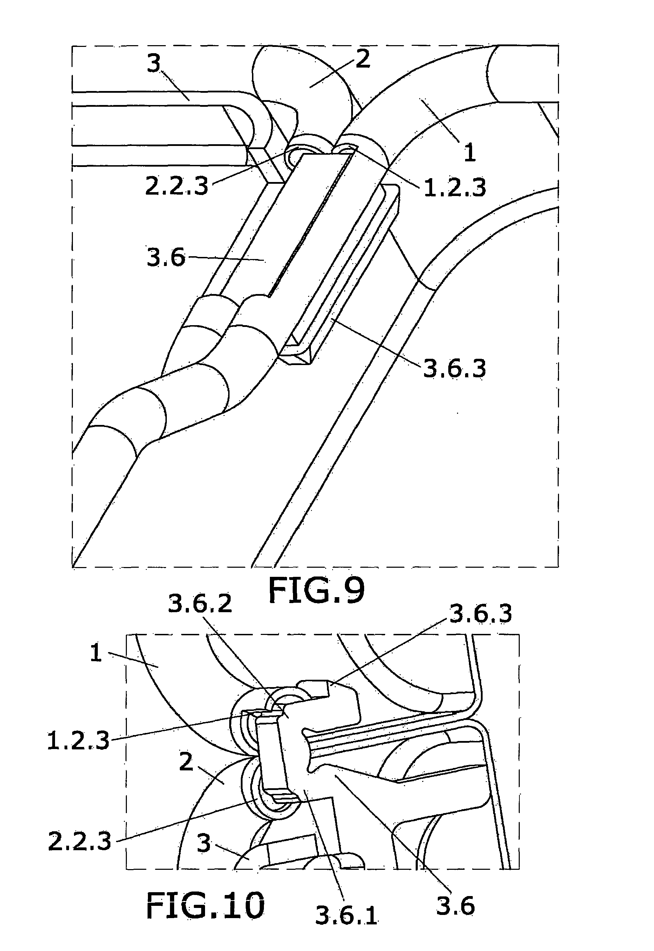

En las figuras 9, 10 y 11 se muestra otra realización de los medios de articulación. Figures 9, 10 and 11 show another embodiment of the means of articulation. Esta realización se caracteriza porque el propio elemento intermedio (3) comprende unos medios que le permiten actuar de bisagra entre ambos elementos externos (1, 2).This embodiment is **characterised in that** the intermediate element (3) consists of means which enable it to act as a hinge between both external elements (1,2). En este caso también los medios de articulación abisagrados comprenden sendos puntos de giro, uno para cada cuerpo externo (1, 2). In this case the hinged means of articulation include rotation points, one for each external body (1,2).

In order to do so, the intermediate body (3) comprises projections (3.6) in an inverted U shape, with each curved section (3.6.1, 3.6.2) introduced in grooves of the (1.2.3, 2.2.3) perimeter ends (1.2.2, 2.2.2) of the lateral walls ((1.2, 2.2). The end of the U opposite the intermediate element (3) comprises an end projection (3.6.3) in order to prevent the intermediate element (3) from coming out of its location. The end projection (3.6.3) comprises a profile, for example, growing upwards which enables it to be introduced in an easy manner and subsequently prevents the intermediate body (3) from disconnecting from the external body (2).

This embodiment of the hinged means of articulation has an advantage over the previously described means as they are incorporated in the intermediate body (3)which facilitates the manufacturing process and diminishes the number of product references, avoiding an additional part (4).

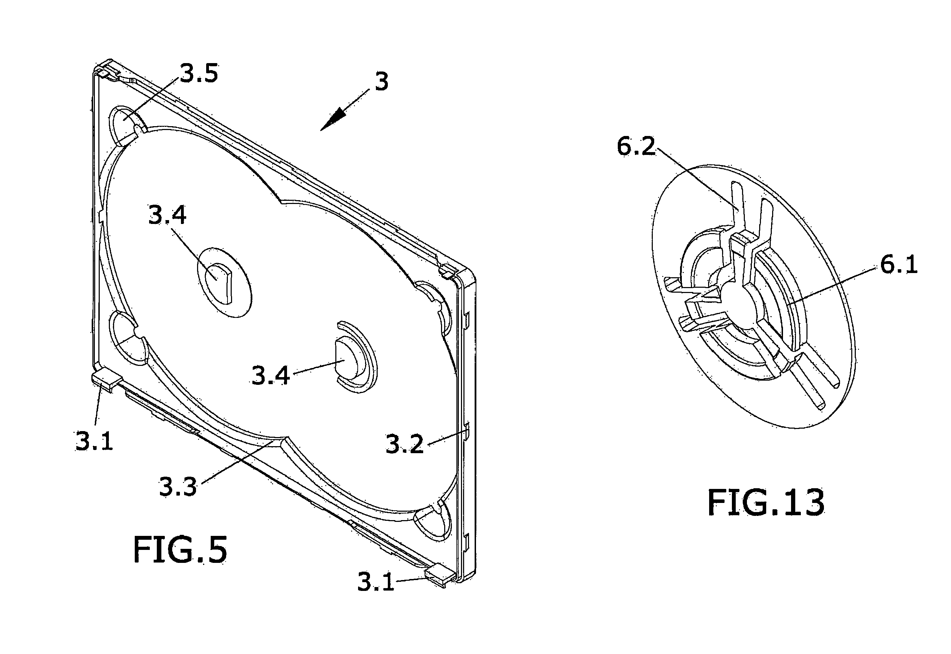

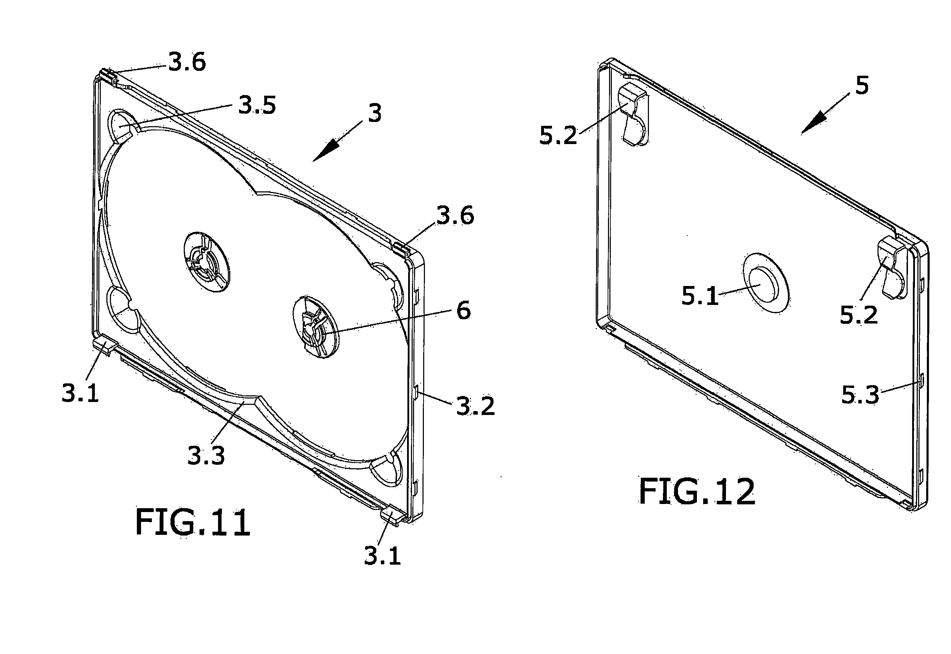

In the embodiments shown in figures 5 and 11 of the intermediate body (3), said body (3) comprises means which permit the two optical magnetic devices to be carried. For this purpose they consist of a hollow (3.3) with the form adequate to the perimeter of the magnetic device and means of clipping (3.4, 6) the same, in this case through their central hole. It also consists of thumb notches (3.5) situated in connection with the hollow (3.3) which facilitate extraction of the magnetic device.

The case in the embodiment shown may incorporate a second intermediate element (5) which may include means of clipping (5,1) in order to carry a magnetic element and/or means of grasping (5.2) of a libretto which accompanies same. It also consists of perimeter projections (5.3) for connection to the corresponding external body (1,2).

Figure 13 shows (6) alternative means of clipping (3.4, 5.1) other than those shown in figures 5, 11 and 12 which comprise elastic circular sectors 86.1) separated by grooves (6.2) producing clipping through the combination of these elements (6.1, 6.2) together with the capacity for elastic recovery of the sectors (6.1).

## Claims

1. Carrying case for optical digital supports which comprise a casing which is provided with bodies (1,2) which include at least one base (1.1, 2.1) and lateral walls (1.2,2.2) which are situated in an articulated manner which additionally includes an intermediate body (3) designed to be situated between both external bodes (1,2) and designed to house at least one optical digital support, **characterised in that** the intermediate body (3) includes in its perimeter at least one groove (3.1.1) which is designed to contain in closed position of the case, perimeter ends ((1.2.2, 2.2.2) of the lateral walls (1.2,2.2) of the external bodies (1,2) in this way producing closure by clipping.

2. Carrying case for optical digital supports according to claim 1, **characterised in that** both bodies (1,2) are independent.

3. Carrying case for optical digital supports according to claim 2, **characterised in that** both external bodies (1,2) facing each other are essentially symmetrical.

4. Carrying case for optical digital supports, according to claim 3, **characterised in that** at least one of the lateral walls (1.2) of one of the external bodies (1,2) comprises a hollow (2.3) in order to facilitate the opening of the case.

5. Carrying case for optical digital supports, according to claim 1, **characterised in that** the external bodies (1,2) of the casing may be made from metal or plastic materials, with the intermediate body (3) made from plastic materials.

6. Carrying case for optical digital supports, according to claim 1, **characterised in that** the perimeter ends (1.2.2, 2.2.2) of the lateral walls (1.2, 2.2) of the external bodies (1,2) are provided with a rounded profile.

7. Carrying case for optical digital supports according to claim 6, **characterised in that** the intermediate body (3) is arranged joined to one of the external bodies (2) by means of perimeter projections (3.2) designed to remain housed under the perimeter edge (2.2.2) of the aforementioned external body (2).

8. Carrying case for optical digital supports, according to claim 1, **characterised in that** the means of articulation include at least one hinge (4) which consists of rotation points in its connection to each one of the external bodies (1,2).

9. Carrying case for optical digital supports, according to claims 6 and 8, **characterised in that** the hinge (4) comprises wings (4.1) with circular profile joined together and placed in grooves (1.2.3, 2.2.3) made in the perimeter ends (1.2.2, 2.2.2) of the lateral walls (1.2.1, 2.2.1) so that the hinges (4) may rotate within same (1.2.3, 2.2.3).

10. Carrying case for optical digital supports, according to claim 1, **characterised in that** the means of articulation comprise at least one projection (3.6) situated in the intermediate element (3) in the shape of an inverted U, with each curved section (3.6.1, 3.6.2) placed in the grooves (1.2.3, 2.2.3) of the perimeter ends (1.2.2, 2.2.2) of the lateral walls (1.2, 2.2).

11. Carrying case for optical digital supports, according to claim 10, **characterised in that** the end of the U opposite the intermediate element (3) comprises an end projection (3.6.3) in order to prevent the intermediate element (3) from coming out of its location.
